# FASCICULE DE BREVET EUROPEEN

(11) **EP 3 638 531 B1**
(45) Date de publication et mention de la délivrance du brevet: **11.08.2021**
(21) Numéro de dépôt: 18735669.6
(22) Date de dépôt: 08.06.2018
(51) Int. Cl.: B60K 11/08

(54) **SYSTÈME AÉRODYNAMIQUE ACTIF AVEC ACTIONNEUR DÉPORTÉ**
AKTIVES AERODYNAMISCHES SYSTEM MIT VERSATZSTELLGLIED
ACTIVE AERODYNAMIC SYSTEM WITH OFFSET ACTUATOR

(30) Priorité: 13.06.2017 FR 1755257
(43) Date de publication de la demande: 22.04.2020
(73) Titulaire: Compagnie Plastic Omnium, 69007 Lyon (FR)
(72) Inventeur: PARRA, Stéphane, 69120 Vaulx-En-Velin (FR)
(74) Mandataire: LLR
(86) Numéro de dépôt international: PCT/FR2018/051342
(87) Numéro de publication internationale: WO 2018/229402

(56) Documents cités:
- DE-A1- 10 306 158
- DE-A1-102014 006 662
- DE-A1-102014 103 667
- FR-A1- 2 965 857
- GB-A- 2 483 977
- KR-A- 20160 057 632
- US-A1- 2012 012 410
- US-A1- 2014 273 806
- US-A1- 2015 090 508

## Description

La présente invention concerne le domaine des véhicules automobiles, et notamment les systèmes aérodynamiques actifs des véhicules automobiles. L'invention traite plus précisément de l'actionnement de tels systèmes actifs et de la transmission des efforts au sein de ces systèmes.

Avec l'avènement de l'informatique et des systèmes automatisés, les systèmes actifs de véhicules et plus spécifiquement, les systèmes aérodynamiques actifs, sont aujourd'hui très répandus et utilisés dans l'industrie automobile. On peut par exemple citer les volets situés au niveau de la grille d'entrée d'air à l'avant du véhicule.

Il est connu des systèmes aérodynamiques actifs dans lesquels un actionneur commande la mise en mouvement d'éléments mobiles, par exemple les volets. Les éléments mobiles sont fixés à une structure, par exemple, un cadre dans le cas des volets d'entrée d'air. L'actionneur de ces systèmes est relié à une même unité de commande électronique, elle-même présente dans le véhicule, qui centralise les données et gère les mises en mouvements des éléments mobiles des systèmes mentionnés.

Pour des raisons de compacité du système et d'optimisation de la place disponible au sein du véhicule, l'actionneur peut être déporté sur un coté de la structure. Cette déportation permet, en outre, pour le cas des volets d'entrée d'air de dégager une place centrale, nécessaire au fonctionnement du radar central. Dès lors, l'actionneur met en mouvement une série d'éléments mobiles qui doit assurer la transmission des efforts aux autres séries d'éléments mobiles, et ce afin de les mettre, eux-aussi, en mouvement. Cette transmission peut s'effectuer directement entre la série d'éléments mobiles motrice et les autres séries, mais s'effectue plus généralement par l'intermédiaire d'une pièce supplémentaire centrale. De tels systèmes aérodynamiques actifs sont connus des documents DE102014006662A1 et GB2483977A.

Un des inconvénients de tels systèmes aérodynamiques actifs est que de nombreux jeux sont susceptibles de se former le long de la chaine de transmission d'efforts, notamment au niveau des points de transmission entre les différents membres de cette chaine. En effet, de fortes contraintes mécaniques s'appliquent au niveau des points de transmission, du fait de la transmission des efforts et peuvent aboutir à la création de jeux non souhaités ou à leur accroissement. En conséquence de la combinaison de ces jeux et des fortes contraintes, la pièce supplémentaire transmettant les efforts entre deux séries d'éléments mobiles, est susceptible de vriller ou de s'arcbouter lorsque l'actionneur commande la mise en mouvement de la série d'éléments mobiles motrice. Dès lors la transmission des efforts, et, par extension, la mise en mouvement des séries d'éléments mobiles sont perturbées, voire impossibles.

Dans le sens contraire, à savoir d'une seconde série d'éléments mobiles vers la série motrice, la transmission d'efforts peut également intervenir, notamment lorsque les éléments mobiles de la seconde série sont mis en mouvement par des facteurs extérieurs, tels que la pression aérodynamique. Dans ce cas de figure, la combinaison de ces jeux et des fortes contraintes qui s'applique au niveau des points de transmission entre la seconde série d'élément mobiles et la pièce supplémentaire, peut aboutir à la déformation de certains éléments mobiles de la seconde série et/ou de la pièce supplémentaire. Une telle déformation des éléments mobiles représente un inconvénient pour le système qui ne garantit, dès lors, plus l'étanchéité et l'aérodynamisme nécessaire au système, a *minima* à l'endroit du système comprenant les éléments mobiles déformés.

Autrement dit, il est très compliqué pour les systèmes aérodynamiques actifs actuels de permettre une intégration optimisée au sein de l'environnement du véhicule, tout en garantissant les propriétés mécaniques nécessaires pour un fonctionnement optimal.

Afin de tenter de remédier à de tels inconvénients, il a été proposé de positionner un actionneur supplémentaire de l'autre côté de la structure de manière à commander individuellement la ou les séries d'éléments mobiles présentes dans cette partie du système.

Cependant, une telle solution est contraignante. En effet, en plus du coût supplémentaire et le surpoids que représente l'utilisation d'un second actionneur, la mise en place de ce dernier implique également l'utilisation d'une ligne additionnelle permettant sa connexion à l'unité de commande électronique. Or les lignes de connexions vers cette unité sont peu nombreuses et nécessitent d'être économisées le plus possible.

L'invention a pour but de remédier à ces inconvénients en fournissant un système aérodynamique actif de véhicules caractérisé en ce qu'il comprend :
- une structure en plastique moulé comprenant une partie supérieure et une partie inférieure, la structure étant agencée pour recevoir des éléments mobiles,
- au moins une première série d'éléments mobiles et une deuxième série d'éléments mobiles comprenant chacune au moins un élément mobile,
- un actionneur décentré par rapport à la structure et apte à mettre en mouvement au moins un des éléments mobiles de la première série d'éléments mobiles,
- un organe de transmission de forces relié à la première série d'éléments mobiles et à la deuxième série d'éléments mobiles, ledit organe de transmission de force étant apte à transmettre des efforts d'une série d'éléments mobiles à l'autre, l'organe de transmission de forces matérialisant un plan P, et en ce que l'organe de transmission de forces est relié à la partie supérieure et à la partie inférieure de la structure par des liaisons pivot permettant uniquement des déplacements de translation de l'organe de transmission de forces selon un plan parallèle au plan P et en ce que l'organe de transmission de forces est apte à répartir les efforts au sein du système.

Ainsi, le système de l'invention permet d'éviter la formation de jeux non souhaités entre les différents composants du système et une meilleure répartition des efforts, ce qui prémunit ces composants contre des dégradations causées par des contraintes mécaniques. Par « actionneur décentré par rapport à la structure » on entend que l'actionneur n'occupe pas une position dans le centre de la structure, ce qui permet de libérer un espace nécessaire à l'utilisation d'un radar central. L'actionneur peut donc être déporté sur ou vers le côté de la structure, à l'intérieur ou à l'extérieur de cette dernière. Par exemple, l'actionneur peut être fixé sur une face extérieur de la structure. Lorsque cela est nécessaire, l'actionneur est relié à au moins un élément mobile par un mécanisme permettant de transmettre l'effort de l'actionneur dans l'axe de rotation de l'élément mobile pour que cet élément mobile puisse être mis en mouvement.

Avantageusement, l'actionneur présente un axe de sortie et l'élément mobile mis en mouvement par l'actionneur présente un axe de rotation, l'axe de sortie et l'axe de rotation étant confondus.

Ainsi, dans cette variante avantageuse de l'invention, aucun mécanisme additionnel pour la mise en mouvement l'élément mobile n'est nécessaire car l'axe de sortie de l'actionneur et l'axe de rotation de l'élément mobile étant confondus, l'effort de l'actionneur peut être transmis directement à l'élément mobile.

Avantageusement, l'organe de transmission de forces est relié à la partie supérieure et à la partie inférieure de la structure par des biellettes formant des liaisons pivot entre l'organe de transmission de forces et la structure.

Ainsi, il est plus aisé de limiter le déplacement de l'organe de transmission à un unique déplacement selon un plan parallèle au plan P, et ce notamment lorsque les éléments mobiles des différentes séries sont alignés les uns avec les autres.

Avantageusement, deux biellettes forment ensemble deux liaisons pivot colinéaires entre l'organe de transmission de force et la partie supérieure de la structure et deux biellettes forment ensemble deux liaisons pivot colinéaires entre l'organe de transmission de force et la partie inférieure de la structure.

Ainsi, on obtient une meilleure rigidité cinématique entre l'organe de transmission de forces et la structure, ce qui permet de garantir avec encore plus de certitude la limitation de déplacement de l'organe de transmission de forces, uniquement selon un plan parallèle au plan P qu'il matérialise.

Avantageusement, chacune des séries d'éléments mobiles est reliée à l'organe de transmission de forces au moins par une liaison pivot.

Ainsi, il est encore plus aisé de permettre le déplacement de l'organe de transmission selon un plan parallèle au plan P lorsque les éléments mobiles de toutes les séries sont alignés. Les risques de vrillage de l'organe de transmission de forces et les risques de déformations des éléments mobiles sont, dès lors, réduits davantage.

Avantageusement, chaque élément mobile est relié à l'organe de transmission de forces au moins par une liaison pivot.

Ainsi, il est possible, d'une part, de mieux transmettre les efforts des éléments mobiles vers l'organe de transmission et, d'autre part, de mieux répartir, entre tous les éléments mobiles, les efforts centralisés au niveau de l'organe de transmission de forces. Dès lors, il est possible de réduire les contraintes qui s'appliquent sur chacun des éléments mobiles.

Avantageusement, la première série d'éléments mobiles présente un premier axe et la deuxième série d'éléments mobiles présente un deuxième axe, le premier axe et le deuxième axe étant sécants l'un avec l'autre (et donc non confondus).

Ainsi, le système selon cette variante avantageuse de l'invention permet de s'adapter à la contrainte architecturale de certaine partie des véhicules. Il est notamment possible d'intégrer un tel système dans les pièces de carrosseries formant les faces avant de véhicule, qui tendent aujourd'hui à présenter des formes galbées. Dès lors, il est parfois nécessaire, pour répondre à ces nouvelles contraintes architecturales, de proposer des systèmes aérodynamiques actifs dans lesquels les éléments mobiles de série différentes ne sont pas alignés. Cette configuration particulière est rendue possible grâce à l'agencement et aux liaisons de l'organe de transmission de forces avec la structure et les éléments mobiles. En effet, il est possible d'intégrer un système selon l'invention, avec tous ses avantages évoqués, dans des environnements où les jeux et les contraintes au niveau des points de transmission sont très importants, comme cela est le cas pour les systèmes aérodynamiques où les éléments mobiles ne sont pas alignés.

Avantageusement, chacune des séries d'éléments mobiles est reliée à l'organe de transmission de forces par une liaison rotule bénéficiant d'une liberté selon un axe de translation.

Ainsi, il est possible de compenser totalement l'absence d'alignement entre les éléments mobiles de séries différentes. En effet, la liaison rotule avec une liberté selon un axe de translation, aussi appelée liaison « rotule glissante », offre la liberté de déplacement suffisante à l'organe de transmission de forces pour que ce dernier puisse être déplacé uniquement selon un plan parallèle au plan P, et ce malgré l'absence d'alignement des éléments mobiles.

Avantageusement, l'un des éléments mobiles d'une au moins série d'éléments mobiles est relié directement à un autre des éléments mobiles de la même série d'éléments mobiles par une biellette.

Ainsi, il est possible d'assurer une meilleure répartition des efforts entre deux éléments mobiles d'une même série, reliés par la biellette, que ces efforts soient dus à une mise en mouvement par l'actionneur ou à une redistribution d'efforts par l'organe de transmission de forces. Par conséquent, les risques de déformations de ces éléments mobiles sont encore réduits.

L'invention concerne également un ensemble d'une pièce de véhicule automobile et d'un système de carrosserie de véhicule et d'un système aérodynamique actif de véhicule, où la pièce de carrosserie est une face avant de véhicule.

L'invention sera mieux comprise à la lecture des figures annexées, qui sont fournies à titre d'exemples et ne présentent aucun caractère limitatif, dans lesquelles :
- la figure 1 est une représentation en perspective illustrant une partie d'un système aérodynamique actif selon un premier mode de réalisation de l'invention ;
- la figure 2 est une représentation en perspective illustrant une partie d'un système aérodynamique actif selon un deuxième mode de réalisation de l'invention ;
- la figure 3 est un schéma illustrant le fonctionnement et les liaisons du système de la figure 2 ;
- les figures 4 et 5 sont deux représentations en perspectives de la partie du système des figures 2 et 3 qui comprend l'actionneur déporté ; et
- la figure 6 est un agrandissement d'une liaison entre un élément mobile et l'organe de transmission des forces, représenté sous forme de coupe selon le plan P de la figure 2.

On va décrire en détails un système aérodynamique actif 1 de véhicules qui comprend une structure 2, par exemple, faite en plastique moulé. Cette structure 2 comprend une partie supérieure 21 et une partie inférieure 22. Elle présente également un orifice 23 prévu pour l'utilisation d'un radar (non représenté). Cette structure 2 est agencée pour accueillir, entre sa partie supérieure et sa partie inférieure, une première série d'éléments mobiles 3 et une deuxième série d'éléments mobiles 4, séparées l'une de l'autre par un organe de transmission de forces 5 qui matérialise un plan P.

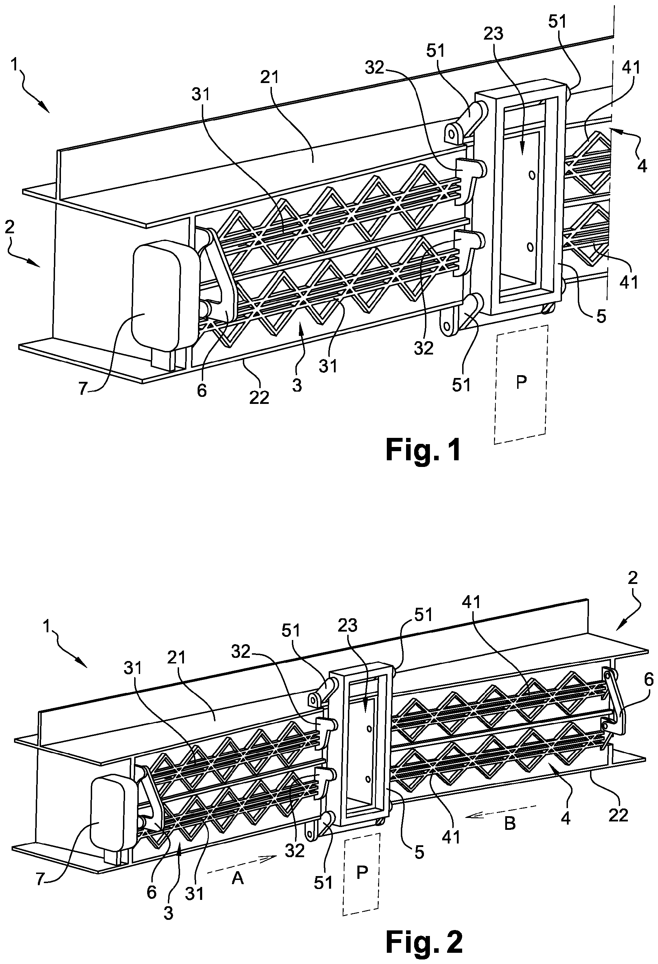

On peut voir aux figures 1 et 2 que les deux séries d'éléments mobiles (3, 4) sont chacune constituées de deux éléments mobiles (31, 41), en l'occurrence des volets aérodynamiques d'entrée d'air. Dans un mode de réalisation non représenté, les séries d'éléments mobiles peuvent comprendre plus de deux éléments mobiles chacune. Le système peut également comprendre un ou plusieurs organes de transmission d'efforts supplémentaire de manière à gérer la répartition d'efforts, des éléments mobiles supplémentaires.

Chaque élément mobile (31, 41) d'une même série (3, 4) est relié à l'autre élément mobile de la série, en bord extérieur de la structure 2, par une biellette 6 qui permet de faciliter une mise en mouvement synchronisée des deux éléments mobiles (31, 41). Cette mise en mouvement est assurée par un actionneur 7, en position déportée. Cet actionneur 7, fixé sur la structure 2, présente un axe de sortie confondu avec l'axe de rotation d'au moins l'un des éléments mobiles 31 de la première série 3, ce qui lui permet d'induire directement le mouvement de cet élément mobile 31. Ce mouvement est ensuite transmis, de proche en proche, par les éléments mobiles (31, 41) et par l'organe de transmission de forces 5. Le phénomène inverse s'opère lorsqu'il s'agit d'une mise en mouvement d'au moins l'un des éléments mobiles 41 de la deuxième série 4. Une telle mise en mouvement peut être induite par des facteurs extérieurs, par exemple la pression aérodynamique.

A l'autre extrémité, à savoir l'extrémité de chaque éléments mobiles (31, 41) située la plus proche de l'organe de transmission de forces 5, chaque élément mobile (31, 41) est relié à l'organe de transmission de forces 5, situé au centre du système. Les éléments mobiles 31 de la première série 3 sont reliés à l'organe de transmission de forces 5 grâce à des moyens de liaison 32. Les moyens de liaison 32 permettant de relier les éléments mobiles 41 de la deuxième série 4 ne sont pas visibles sur les figures. Dans le mode de réalisation de la figure 1, les moyens de liaison 32 assurent a *minima* une liaison pivot entre l'organe de transmission 5 et les éléments mobiles 31 de la première série 3.

L'organe de transmission de forces 5 est relié à la partie supérieure 21 et à la partie inférieure 22 de la structure 2 par des deux liaisons pivot colinéaires assurées, aux exemples des figures 1 et 2, par des biellettes 51. Un tel agencement limite le déplacement de l'organe de transmission de forces 5 qui peut, dès lors, se déplacer uniquement selon un plan parallèle au plan P qu'il matérialise, ce qui prémunit le système contre un vrillage de l'organe de transmission 5 ou contre une déformation de l'un des éléments mobiles. Cette dernière pourrait engendrer des fuites ou des faibles performances aérodynamiques du système 1. L'organe de transmission de forces 5 permet, de par sa position centrale au sein du système, une répartition des efforts qui lui sont transmis par les séries d'éléments mobiles (3, 4) dans l'ensemble du système 1, de tels efforts pouvant émaner de l'actionneur 7 ou de l'environnement extérieur au système 1.

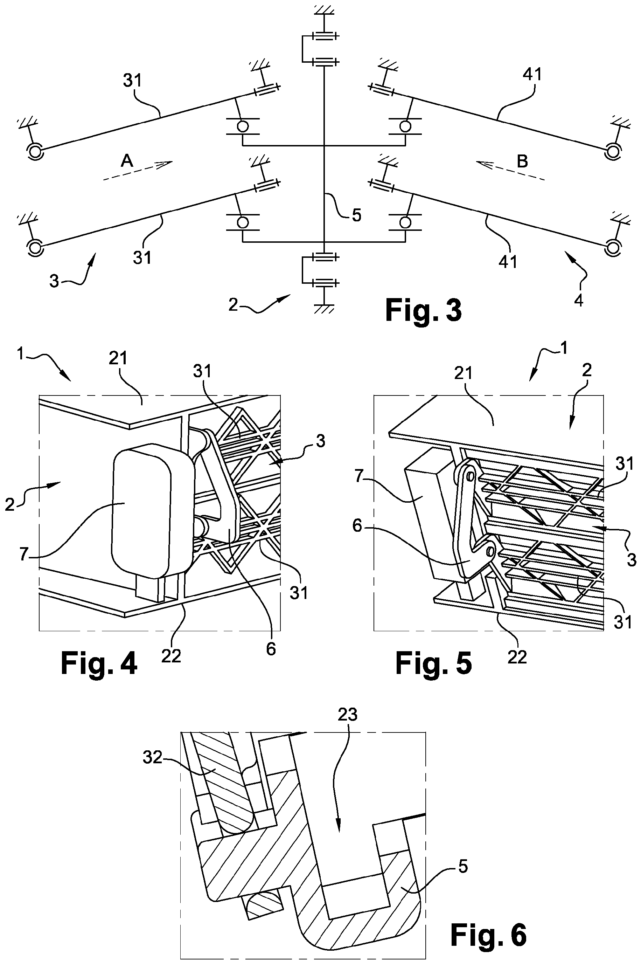

Dans le second mode de réalisation, représenté à la figure 2, les séries d'éléments mobiles (3, 4) ne sont pas alignés. En effet, les éléments mobiles 31 de la première série 3 présentent un axe A, tandis que les éléments mobiles 41 de la deuxième série 4 présentent un axe B. Les axes A et B sont des axes sécants. Dès lors, il est prévu que les éléments de liaison 32, permettant de relier les séries d'éléments mobiles (3, 4) et l'organe de transmission 5, assurent une liaison rotule bénéficiant d'une liberté selon un axe de translation. Cette liaison, visible plus en détails à la figure 6, aussi appelée « rotule glissante », permet de compenser, notamment en termes de jeux, le non alignement des éléments mobiles (31, 41) de la première série 3 et de la deuxième série 4 et ainsi garantir que l'organe de transmission de forces 5 ne vrille pas. Pour ce faire, il est prévu que les moyens de liaisons 32 présentent chacun un orifice ou une cavité coopérant avec un ergot de l'organe de transmission de forces 5 afin d'établir une liaison rotule avec une liberté de translation. Les différents types de liaison entre composants du système 1 selon le deuxième mode de réalisation sont visibles à la figure 3.

Les agrandissements représentés aux figures 4 et 5, sous des perspectives différentes, permettent de visualiser plus en détails l'agencement des différents composants au sein de la structure 2 et la relation entre l'actionneur 7 et les éléments mobiles 31 de la première série 3, ces derniers étant reliés par une biellette 6.

Le système fonctionne comme suit.

Lorsque le passage de l'air est requis à l'avant du véhicule (non représenté), l'actionneur est alimenté par une unité de commande (non représentée) et met en mouvement l'un au moins des éléments mobiles 31 de la première série 3. Grâce à la biellette 6, le second élément mobile 31 de cette même série 3 est lui aussi mis en mouvement, ce qui provoque un changement de leur inclinaison et donc un passage pour l'air qui peut entrer à l'intérieur du véhicule, par exemple pour refroidir le radiateur situé juste derrière la face avant du véhicule. Les efforts, dus à la mise en mouvement des éléments mobiles 31 de la première série 3 sont transmis à l'organe de transmission de forces 5 qui va les répartir de manière plus équitable au sein de tout le système. En parallèle de cette répartition, l'organe de transmission de force 5 va également transmettre une partie de ces efforts aux éléments mobiles 41 de la deuxième série 4 de manière à provoquer un changement de leur inclinaison, cette transmission étant facilité par la biellette 6 reliant les deux éléments mobiles 41.

A l'inverse, lorsqu'il est nécessaire que le passage reste fermé à tout fluide, les contraintes aérodynamiques et mécaniques qui s'appliquent sur les éléments mobiles (31, 41) génèrent des efforts qui se propagent de la même manière que précédemment jusqu'à l'organe de transmission de forces 5. Dans ce cas de figure, l'unique but de l'organe de transmission de forces 5 est la répartition des efforts au sein de tout le système 1, sans mise en mouvement d'aucun éléments mobiles, de manière à ce que ces efforts ne génèrent pas l'apparition ou l'augmentation des jeux entre les différents composants du système 1, permettant ainsi de limiter les fuites, ou de manière à que ces efforts n'endommagent pas les éléments mobiles (31, 41) ou l'organe de transmission de forces 5.

| **Référence** | **Objet désigné** |
|---|---|
| 1 ... | Système aérodynamique actif |
| 2 ... | Structure |
| 3 ... | Première série d'éléments mobiles |
| 4 ... | Deuxième série d'éléments mobiles |
| 5 ... | Organe de transmission de forces |
| 6 ... | Biellette liant deux éléments mobiles d'une même série |
| 7 ... | Actionneur |
| 21 ... | Partie supérieure de la structure |
| 22 ... | Partie inférieure de la structure |
| 23 ... | Orifice prévu pour l'utilisation d'un radar |
| 31 ... | Elément mobile de la première série d'élément mobile |
| 32 ... | Moyens de liaison |
| 41 ... | Elément mobile de la deuxième série d'élément mobile |
| 51 ... | Biellette de fixation de l'organe de transmission de forces à la structure |

## Revendications

1. Système aérodynamique actif (1) de véhicules **caractérisé en ce qu'**il comprend :
- une structure en plastique moulé (2) comprenant une partie supérieure (21) et une partie inférieure (22), la structure (2) étant agencée pour recevoir des éléments mobiles (31 ; 41),
- au moins une première série d'éléments mobiles (3) et une deuxième série d'éléments mobiles (4) comprenant chacune au moins un élément mobile (31 ; 41),
- un actionneur (7) décentré par rapport à la structure (2) et apte à mettre en mouvement au moins un des éléments mobiles (31) de la première série d'éléments mobiles (3),
- un organe de transmission de forces (5) relié à la première série d'éléments mobiles (3) et à la deuxième série d'éléments mobiles (4), ledit organe de transmission de forces (5) étant apte à transmettre des efforts d'une série d'éléments mobiles (3 ; 4) à l'autre, l'organe de transmission de forces (5) matérialisant un plan P,
et **en ce que** l'organe de transmission de forces (5) est relié à la partie supérieure (21) et à la partie inférieure (22) de la structure (2) par des liaisons pivot permettant uniquement des déplacements de translation de l'organe de transmission de forces (5) selon un plan parallèle au plan P et ce que l'organe de transmission de forces (5) est apte à répartir les efforts au sein du système (1), l'organe de transmission de forces (5) étant relié à la partie supérieure (21) et à la partie inférieure (22) de la structure (2) par des biellettes (51) formant des liaisons pivot entre l'organe de transmission de forces (5) et la structure (2).

2. Système aérodynamique actif (1) selon la revendication précédente dans lequel l'actionneur (7) présente un axe de sortie et l'élément mobile (31) mis en mouvement par l'actionneur (7) présente un axe de rotation, l'axe de sortie et l'axe de rotation étant confondus.

3. Système aérodynamique actif (1) selon la revendication 1 ou 2 dans lequel deux biellettes (51) forment ensemble deux liaisons pivot colinéaires entre l'organe de transmission de forces (5) et la partie supérieure (21) de la structure (2) et dans lequel deux biellettes (51) forment ensemble deux liaisons pivot colinéaires entre l'organe de transmission de forces (5) et la partie inférieure (22) de la structure (2).

4. Système aérodynamique actif (1) selon l'une quelconque des revendications précédentes, dans lequel chacune des séries d'éléments mobiles (3 ; 4) est reliée à l'organe de transmission de forces (5) au moins par une liaison pivot.

5. Système aérodynamique actif (1) selon la revendication précédente, dans lequel chaque élément mobile (31 ; 41) est relié à l'organe de transmission de forces (5) au moins par une liaison pivot.

6. Système aérodynamique actif (1) selon l'une quelconque des revendications précédentes, dans lequel la première série d'éléments mobiles (3) présente un premier axe (A) et la deuxième série d'éléments mobiles (4) présente un deuxième axe (B), le premier axe (A) et le deuxième axe (B) étant sécants l'un avec l'autre.

7. Système aérodynamique actif (1) selon la revendication précédente, dans lequel chacune des séries d'éléments mobiles (3 ; 4) est reliée à l'organe de transmission de forces (5) par une liaison rotule bénéficiant d'une liberté selon un axe de translation.

8. Système aérodynamique actif (1) selon l'une quelconque des revendications précédentes, dans lequel, l'un des éléments mobiles (31 ; 41) d'une au moins série d'éléments mobiles (3 ; 4) est relié directement à un autre des éléments mobiles (31 ; 41) de la même série d'éléments mobiles (3 ; 4) par une biellette (6).

9. Ensemble d'une pièce de carrosserie de véhicule et d'un système aérodynamique actif (1) de véhicule selon l'une quelconque des revendications précédentes, **caractérisé en ce que** la pièce de carrosserie de véhicule est une face avant de véhicule.

## Patentansprüche

1. Ein aktives aerodynamisches System (1) für Fahrzeuge, **dadurch gekennzeichnet, dass** es aufweist:
- eine geformte Kunststoffstruktur (2) mit einem oberen Teil (21) und einem unteren Teil (22), wobei die Struktur (2) zur Aufnahme von beweglichen Elementen (31, 41) angeordnet ist
- mindestens einer ersten Reihe von beweglichen Elementen (3) und einer zweiten Reihe von beweglichen Elementen (4), die jeweils mindestens ein bewegliches Element (31, 41) aufweisen
- ein Stellglied (7), das in Bezug auf die Struktur (2) außermittig angeordnet ist und mindestens ein bewegliches Element (31) der ersten Reihe beweglicher Elemente (3) in Bewegung setzen kann
- ein Kraftübertragungselement (5), das mit der ersten Reihe von beweglichen Elementen (3) und mit der zweiten Reihe von beweglichen Elementen (4) verbunden ist, wobei das Kraftübertragungselement (5) eingerichtet ist, Kräfte von einer Reihe von beweglichen Elementen (3, 4) zu der anderen zu übertragen, wobei das Kraftübertragungselement (5) eine Ebene P verwirklicht,
und dass das Kraftübertragungselement (5) mit dem oberen Teil (21) und dem unteren Teil (22) der Struktur (2) durch Drehverbindungen verbunden ist, die nur Translationsbewegungen des Kraftübertragungselements (5) in einer Ebene parallel zu der Ebene P zulassen, und dass das Kraftübertragungselement (5) eingerichtet ist, die Kräfte innerhalb des Systems (1) zu verteilen, wobei das Kraftübertragungselement (5) mit dem oberen Teil (21) und mit dem unteren Teil (22) der Struktur (2) durch Verbindungsstangen (51) verbunden ist, die Drehverbindungen zwischen dem Kraftübertragungselement (5) und der Struktur (2) bilden.

2. Aktives aerodynamisches System (1) nach dem vorhergehenden Anspruch, wobei das Stellglied (7) eine Abtriebsachse und das von dem Stellglied (7) in Bewegung gesetzte bewegliche Element (31) eine Drehachse aufweist, wobei die Abtriebsachse und die Drehachse zusammenfallen.

3. Aktives aerodynamisches System (1) nach Anspruch 1 oder 2, wobei zwei Verbindungsstangen (51) zusammen zwei kollineare Drehverbindungen zwischen dem Kraftübertragungselement (5) und dem oberen Teil (21) der Struktur (2) bilden und wobei zwei Glieder (51) zusammen zwei kollineare Drehverbindungen zwischen dem Kraftübertragungselement (5) und dem unteren Teil (22) der Struktur (2) bilden.

4. Aktives aerodynamisches System (1) nach einem der vorhergehenden Ansprüche, wobei jede der Reihen von beweglichen Elementen (3, 4) mit dem Kraftübertragungselement (5) mindestens durch eine Drehverbindung verbunden ist.

5. Aktives aerodynamisches System (1) nach dem vorhergehenden Anspruch, wobei jedes bewegliche Element (31, 41) mit dem Kraftübertragungselement (5) zumindest durch eine Drehverbindung verbunden ist.

6. Aktives aerodynamisches System (1) nach einem der vorhergehenden Ansprüche, wobei die erste Reihe beweglicher Elemente (3) eine erste Achse (A) und die zweite Reihe beweglicher Elemente (4) eine zweite Achse (B) aufweist, wobei sich die erste Achse (A) und die zweite Achse (B) miteinander schneiden.

7. Aktives aerodynamisches System (1) nach dem vorhergehenden Anspruch, wobei jedes der Reihen von beweglichen Elementen (3, 4) mit dem Kraftübertragungselement (5) durch eine Kugelgelenkverbindung verbunden ist mit Freiheit entlang einer Translationsachse verbunden ist.

8. Aktives aerodynamisches System (1) nach einem der vorhergehenden Ansprüche, wobei eines der beweglichen Elemente (31, 41) mindestens einer Reihe von beweglichen Elementen (3, 4) direkt mit einem anderen der beweglichen Elemente (31, 41) derselben Reihe von beweglichen Elementen (3, 4) durch eine Verbindungsstange (6) verbunden ist.

9. Anordnung aus einem Fahrzeugkarosserieteil und einem aktiven aerodynamischen Fahrzeugsystem (1) nach einem der vorhergehenden Ansprüche, **dadurch gekennzeichnet, dass** das Fahrzeugkarosserieteil ein Fahrzeugvorderteil ist.

## Claims

1. Active aerodynamic system (1) for vehicles, **characterised in that** it comprises :
- a moulded plastic structure (2) comprising an upper part (21) and a lower part (22), the structure (2) being arranged to receive movable elements (31; 41),
- at least a first set of movable elements (3) and a second set of movable elements (4) each comprising at least one movable element (31; 41),
- an actuator (7) off-centre with respect to the structure (2) and able to set in motion at least one of the movable elements (31) of the first series of movable elements (3),
- a force transmission member (5) connected to the first series of movable elements (3) and to the second series of movable elements (4), said force transmission member (5) being capable of transmitting forces from one series of movable elements (3; 4) to the other, the force transmission member (5) materializing a plane P,
and **in that** the force transmission member (5) is connected to the upper part (21) and to the lower part (22) of the structure (2) by pivot linkages allowing only translational displacements of the force transmission member (5) in a plane parallel to the plane P, and **in that** the force transmission member (5) is capable of distributing the forces within the system (1), the force transmission member (5) being connected to the upper part (21) and to the lower part (22) of the structure (2) by roads (51) forming pivot linkages between the force transmission member (5) and the structure (2).

2. An active aerodynamic system (1) according to the preceding claim wherein the actuator (7) has an output axis and the movable element (31) set in motion by the actuator (7) has a rotational axis, the output axis and the rotational axis being coincident.

3. An active aerodynamic system (1) according to claim 1 or 2 wherein two roads (51) together form two collinear pivot linkages between the force transmission member (5) and the upper part (21) of the structure (2) and wherein two roads (51) together form two collinear pivot linkages between the force transmission member (5) and the lower part (22) of the structure (2).

4. Active aerodynamic system (1) according to any of the preceding claims, wherein each of the series of movable elements (3; 4) is connected to the force transmission member (5) at least by a pivot linkage.

5. Active aerodynamic system (1) according to the preceding claim, wherein each movable element (31; 41) is connected to the force transmission member (5) at least by a pivot linkage.

6. An active aerodynamic system (1) according to any one of the preceding claims, wherein the first set of movable elements (3) has a first axis (A) and the second set of movable elements (4) has a second axis (B), the first axis (A) and the second axis (B) intersecting each other.

7. Active aerodynamic system (1) according to the preceding claim, wherein each of the series of movable elements (3; 4) is connected to the force transmission member (5) by a ball- joint linkage enjoying freedom along a translation axis.

8. An active aerodynamic system (1) according to any one of the preceding claims, wherein, one of the movable elements (31; 41) of at least one set of movable elements (3; 4) is directly connected to another of the movable elements (31; 41) of the same set of movable elements (3; 4) by a linkage (6).

9. An assembly of a vehicle body part and a vehicle active aerodynamic system (1) according to any of the preceding claims, **characterised in that** the vehicle body part is a vehicle front end.
